# EUROPEAN PATENT APPLICATION

(11) **EP 3 886 385 A1**
(43) Date of publication of application: **29.09.2021**
(21) Application number: 20212843.5
(22) Date of filing: 09.12.2020
(51) Int. Cl.: H04L 12/851, H04L 12/863

(54) **DEVICE, SYSTEM AND METHOD TO DYNAMICALLY PRIORITIZE A DATA FLOW BASED ON USER INTEREST IN A TASK**

(30) Priority: 27.03.2020 US 202016833125
(71) Applicant: INTEL Corporation, Santa Clara, CA 95054 (US)
(72) Inventor: FLEMING, Kristoffer, Chandler, Arizona 85249 (US); DIEFENBAUGH, Paul, Portland, Oregon 97229 (US); ZHU, Jianfang, Hillsboro, Oregon 97124 (US); GINSBURG, Noam, Portland, Oregon 97229 (US); CHABUKSWAR, Rajshree, Sunnyvale, California 94086 (US); BRAUN, William, Beaverton, Oregon 97007 (US); KIRUBAKARAN, Deepak Samuel, Hillsboro, Oregon 97123 (US); UDHAYAN, Venkateshan, Portland, Oregon 97229 (US); KUWAHARA, Atsuo, Portland, Oregon 97229 (US); SIVAKUMAR, Ramakrishnan, Hillsboro, Oregon 97124 (US); MOHAN, Keerthanna, Hillsboro, Oregon 97124 (US)
(74) Representative: HGF

(57) **Abstract**

Techniques and mechanisms to dynamically prioritize communication of a data flow based on an indication of a user's interest in a particular task. In an embodiment, data flows correspond to different respective tasks that are executed with a host operating system. An output of a human interface device indicates whether, at a particular time, a user of a computer device is interested in one particular task over another task. Where greater user interest in a first task is indicated, a first packet type corresponding to the first task is assigned a relatively high priority, as compared to a second packet type which corresponds to a second task. Based on the priority, a resource of the network interface is selectively made available (or prevented from being made available) for the communication of a given packet. In another embodiment, the resource includes a queue of the network interface.

## Description

### BACKGROUND

### 1. Technical Field

Embodiments of the invention relate generally to network communications and more particularly, but not exclusively, to prioritizing data packets that are for communication with a foreground task.

### 2. Background Art

Cloud services and other network-based technologies often have hard latency requirements that are difficult to meet during periods of high network traffic. As a result, Quality of Service (QoS) control mechanisms are important to facilitate communications for many web applications such as browsing, gaming, shopping, banking, and music/video streaming, and teleconferencing.

QoS control mechanisms typically provide different priorities for various data flows. One such control mechanism uses queues which are variously allocated each for a respective type (or types) of data packets that are to have a particular priority. In some existing client platforms, a semiconductor fabricator, original equipment manufacturer (OEM), or third party software provides for the whitelisting of a given software application to assure some minimum network communication performance. However, such whitelisting functionality typically imposes a high packet processing overhead and/or has limited ability to change dynamically with network utilization.

As the number and variety of high bandwidth network technologies continue to proliferate, there is expected to be an increasing demand for more efficient network communications to consistently deliver an improved user experience.

### BRIEF DESCRIPTION OF THE DRAWINGS

The various embodiments of the present invention are illustrated by way of example, and not by way of limitation, in the figures of the accompanying drawings and in which:
FIG. 1 is a functional block diagram illustrating elements of a system to determine a priority of a network communication according to an embodiment.
FIG. 2 is a flow diagram illustrating elements of a method for prioritizing communications with a task according to an embodiment.
FIG. 3 is a functional block diagram illustrating elements of a computer device to prioritize network communications according to an embodiment.
FIG. 4 is a flow diagram illustrating elements of a method for prioritizing communications with a task according to an embodiment.
FIGs. 5A, 5B are data diagrams illustrating a format of a packet to communicate prioritization information according to an embodiment.
FIGS. 6A, 6B are tables each illustrating a respective mapping of priority information according to a corresponding embodiment.
FIG. 7 is a functional block diagram illustrating a computing device in accordance with one embodiment.
FIG. 8 is a functional block diagram illustrating an exemplary computer system, in accordance with one embodiment.

### DETAILED DESCRIPTION

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Embodiments described herein variously provide techniques and/or mechanisms to communicate data flows with a network interface, wherein a resource of the network interface is selectively made available (or alternatively, prevented from being made available) for the communication of one particular data flow. The availability of such a resource for packets of the given data flow is based, for example, on an indication of a user's interest in a particular task. Various embodiments dynamically adapt a relative prioritization of packet types, for various data flows over time, as a user of a computer device exhibits interest in different tasks. As compared to existing techniques, such embodiments efficiently adapt network communications for improved user experience.

In an embodiment, two or more data flows correspond to different respective tasks that are executed with a host operating system (OS). An output of one or more human interface devices (HIDs) provides a basis for detecting whether, at a particular time, a user of a computer device is interested in one particular task over one or more other copending tasks. Where relatively greater user interest in some first task is indicated, that first task (and/or a first packet type corresponding to the first task) is assigned a relatively high priority, in various embodiments - e.g., as compared to some second task and/or a corresponding second packet type.

In some embodiments, a field in a given packet of a given data flow is used to provide a value based on such a relative prioritization of tasks. The value specifies or otherwise indicates a type and/or degree of a service to be provided by circuitry of a network interface (according to the priority which is currently assigned to the given data flow), to facilitate communication of the packet. In one such embodiment, the value is communicated by adapting the use of a Differentiated Services Code Point (DSCP) field, a traffic identifier (TID) field, or any of various other suitable fields in certain standard packet formats.

In some embodiments, user interest is indicated by the task being (at a given time) a foreground task while one or more other co-pending tasks are each a respective background task. In this context, "foreground task," "foreground task type" and similar terms variously refer to the characteristic of one or more user interface features, associated with a given task, being available in favor of - e.g., to the exclusion of - one or more other user interface features which are associated with a different (background) task. By way of illustration and not limitation, a window or other graphical user interface (GUI) feature associated with a foreground task is typically displayed over, or is capable of being displayed over, a GUI feature associated with a background task. Alternatively or in addition, typing, voice commands and/or any of various other user interactions result in a corresponding input to a foreground task, rather than to a background task. Alternatively or in addition, some user input is required to transition a given task between being classified as a background task type and being classified as a foreground task type. For example, such input starts a new (foreground) task, pauses or terminates a foreground task, or selects a current background task to be the next foreground task. Alternatively or in addition, a foreground task is one which is selected by the user to provide UI output (e.g., including video output, audio output, haptic output and/or the like) which takes precedence over, or is in lieu of, some other copending task providing other output and/or receiving user input. In some embodiments, a task automatically becomes a foreground task in response to a predefined trigger event, such as another task automatically entering an idle state.

In an example scenario according to one embodiment, a first task and a second task are represented (respectively) by a first tab and a second tab of the same web browser. The first task is a foreground task (and the second task a background task) when, for example, the first tab is displayed over the second tab, or otherwise takes precedence over the second tab for providing output and/or receiving input. In another example scenario, a first task and a second task are represented (respectively) by a first pane and a second pane of the same GUI window. The first task is a foreground task (and the second task a background task) when, for example, the first pane is selected, over the second pane, as the focus for receiving user input and/or providing user output.

Certain features of various embodiments are described herein with reference to a selective allocating of various queues of a network interface for packets of different data flows, where such allocating is based on a relative prioritization of different packet types. However, some embodiments selectively allocate any of various additional or alternative resources of a network interface to different data flows based on a user's interest in a particular task.

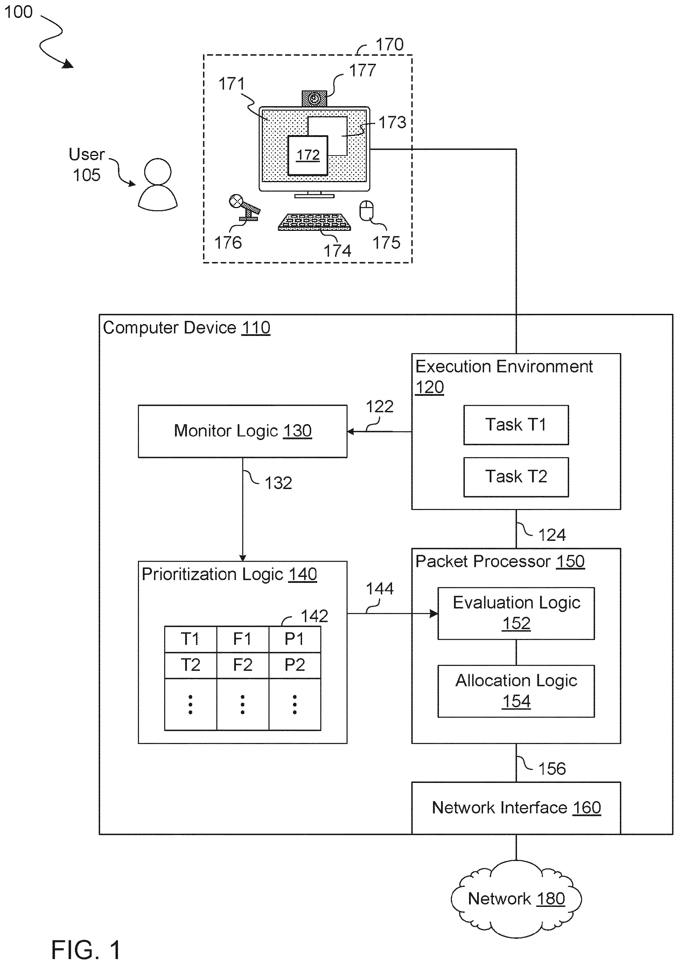

FIG. 1 shows features of a system 100 to determine a prioritization of data packets that are communicated with a network according to an embodiment. System 100 is one example of an embodiment wherein hardware logic and/or software logic assigns a relative priority of one data packet type over another data packet type, where the assigning is based on a task being a particular one of a foreground task type or a background task type.

As shown in FIG. 1, system 100 includes a computer device 110 that provides an execution environment 120 which facilitates user interaction with system 100. Computer device 110 is embodied as any type of device capable of performing the functions described herein. For example, computer device 110 is embodied as, without limitation, a smart phone, a tablet computer, a laptop computer, a notebook computer, a desktop computer, a consumer electronic device, a digital television device, and/or any other computing device configured to prioritize network communication based on a foreground (or background) type of a given task.

Computer device 110 couples to - or alternatively, includes - one or more human interface devices (HIDs) 170 to receive input from, or otherwise detect action by, a user 105 of system 100. In the illustrative embodiment shown, the one or more human interface devices 170 comprises some or all of a display device 171, a keyboard 174, a mouse 175, an audio sensor 176, and an image sensor 177 (such as a video camera). However, system 100 includes more, fewer or different HID, in other embodiments. For example, other examples of HIDs to receive user input and/or to otherwise sense user interest in a task (or in a software process which corresponds to said task) include, but are not limited to, a game controller, a gyroscope or other motion sensor, and the like. In some embodiments, the one or more HIDs 170 additionally or alternatively include a speaker, a haptic feedback device, and/or any of various other devices (not shown) which are operable to provide UI output. Some embodiments are not limited to a particular one or more HIDs by which user 105 interacts with computer device 110.

A network interface 160 of computer device 110 facilitates communication between system 100 and a remote device via one or more wired networks and/or one or more wireless networks (as illustrated by network 180). Network interface 160 is embodied as any of various communication circuits, devices, or collections thereof, which are suitable for enabling network communications. The network interface 160 is configured to use any one or more communication technologies (e.g., wireless or wired communications) and associated protocols (e.g., Ethernet, WiFi®, WiMAX, etc.) to effect such communication. In some embodiments, the network interface 160 is embodied as a network interface card (NIC), or a network adapter such as a wireless network adapter.

Display device 171 is embodied, for example, as any type of display capable of displaying digital information, such as a liquid crystal display (LCD), a light emitting diode (LED) display, a plasma display, a cathode ray tube (CRT), or other type of display device. In some embodiments, display device 171 provides a touch screen functionality that is embodied as any type of touch screen capable of generating input data in response to being touched by user 105 (and/or other such user of computer device 110). Such a touch screen uses any suitable touch screen input technology to detect tactile selection by user 105 of information displayed on display device 171 including, but not limited to, resistive touch screen sensors, capacitive touch screen sensors, camera-based touch screen sensors, surface acoustic wave (SAW) touch screen sensors, infrared touch screen sensors, optical imaging touch screen sensors, acoustic touch screen sensors, and/or other type of touch screen sensors. A touch screen of display device 171 is responsive to multiple simultaneous touch points, in some embodiments.

Audio sensor 176 illustrates any of various sensors capable of capturing audio signals such as a microphone, a line input jack, an analog-to-digital converter (ADC), or other type of audio sensor. In some embodiments, image sensor 177 is embodied as a digital camera or other digital imaging device coupled to (or alternatively, integrated with) computer device 110. The image sensor 177 includes an electronic image sensor, such as an active-pixel sensor (APS), e.g., a complementary metal-oxide-semiconductor (CMOS) sensor, or a charge-coupled device (CCD).

Execution environment 120 is provided with a host operating system (OS) that, for example, is a Windows-based operating system, a Unix or Linux based operating system, a MacOS, or any other suitable operating system. In some embodiments, the host OS is of a type (such as iOS, Android, Windows Mobile, etc.) that is designed for operation on a handheld device.

The host OS is executed with a processor (not shown) of computer device 110, where said processor is embodied as any type of processor capable of facilitating the performance of tasks as described herein. For example, the processor is embodied as a single or multi-core processor(s), digital signal processor, microcontroller, or other processor or processing/controlling circuit. Execution of the host OS is further facilitated with a memory (not shown) which is coupled to the processor - e.g., where the memory is embodied as any type of volatile or non-volatile memory or data storage capable of performing the functions described herein. In operation, the memory stores various data and software used during operation of computer device 110 such as operating systems, applications, programs, libraries, and drivers. The memory is communicatively coupled to the processor via any of a variety of suitable components and/or subsystems including, but not limited to, one or more memory controller hubs, input/output control hubs, firmware devices, communication links (such as point-to-point links, bus links, wires, cables, light guides, printed circuit board traces, etc.), or the like.

In an embodiment, execution environment 120 (and/or one or more applications which run in execution environment 120) operates some or all of the one or more human interface devices 170 to provide one or more user interfaces. In one example embodiment, a graphical user interface (GUI) is presented with display device 171 - e.g., wherein some or all of keyboard 174, mouse 175, audio sensor 176 and image sensor 177 facilitate a detection of whether and/or how user 105 interacts with, or is otherwise interested in, a given feature of said GUI. For example, keyboard 174 enables user 105 to interact with a given application by inputting typed characters which variously represent text, instructions and/or other information. Alternatively or in addition, mouse 175 enables user 105 to interact with said application by moving a cursor of the GUI and, for example, clicking on a particular window, window pane, menu item or other GUI feature. Alternatively or in addition, audio sensor 176 enables user 105 to provide voice commands to a virtual assistant process.

During operation of system 100, execution environment 120 performs or otherwise supports some multiple tasks which, at a given time, are pending concurrently with each other. In an embodiment, the multiple tasks each include, participate in, or otherwise operate based on, a respective data flow of communications between computer device 110 and network 180. The respective data flows for said tasks compete with one another for one or more network communication resources of computer device 110. Some embodiments facilitate efficient use of such resources - e.g., resulting in improved user experience - by prioritizing data packets of one flow over data packets of one or more other flows, where such prioritization is based on a level of user interest (for example, based on whether a task is a particular one of a background task type or a foreground task type).

In one example embodiment, execution environment 120 supports the performance of multiple tasks comprising the illustrative tasks T1, T2 shown. For example, tasks T1, T2 are each a respective one of a task of the host OS, or a task of an application which is executed on the host OS. Packets 156 which are variously communicated to and/or from network interface 160 include packets of a first flow for task T1, and other packets of a second flow for task T2.

In one such embodiment, tasks T1, T2 are represented by, or otherwise correspond to, GUI windows 172, 173 (respectively) that are displayed with display device 171. At a given time, one of tasks T1, T2 is determined to be of a relatively higher interest to user 105 than the other of tasks T1, T2. For example, task T1 is classified a foreground task (and task T2 as a background task) where some sensing - performed with the one or more human interface devices 170 - indicates that, at a given time, user 105 is more interested in the task T1 which corresponds to GUI window 172 than in the task T2 which corresponds to GUI window 173. At some other time, for example, task T2 is classified a foreground task (and task T1 as a background task) where sensing with the one or more human interface devices 170 instead indicates that user interest in GUI window 173 is greater than user interest in GUI window 172.

Some embodiments variously determine a prioritization of network communication traffic for one task - e.g., the prioritization relative to network communication traffic for a different task - based on a current level of user interest in the task (for example, based on whether the task is a particular one of a foreground task type or a background task type). For example, monitor logic 130 of computer device 110 comprises hardware and/or executing software which includes, has access to, or otherwise operates based on some preconfigured system state which specifies or otherwise indicates one or more criteria for classifying a task as belonging to a foreground task type or (alternatively) to a background task type.

In the embodiment shown, monitor logic 130 is coupled to directly or indirectly monitor interactions by user 105 with the one or more human interface devices 170. For example, monitor logic 130 is coupled to receive one or more signals (such as the illustrative signal 122 shown) which specify or otherwise indicate a type and/or level of interaction by user 105 with the one or more human interface devices 170. Signal 122 is provided by execution environment 120 or, alternatively, by the one or more human interface devices 170, for example.

In one example embodiment, signal 122 indicates one or more events including, but not limited to, a typed input being received with keyboard 174, movement of a cursor and/or selection of a GUI element with mouse 175, a voice command or other sound being detected with audio sensor 176, a touch event at a touchscreen of display device 171, or the like. In some embodiments, signal 122 additionally or alternatively communicates image processing information - e.g., generated with eye tracking logic, gesture recognition logic or the like - which indicates a movement by user 105 which provides input for, or otherwise represents interest in, a particular one of GUI windows 172, 173 (and a corresponding one of tasks T1, T2).

In some embodiments, signal 122 explicitly identifies a task as being a current foreground task (or current background task). For example, in one such embodiment, signal 122 is received from a host OS, an API or other software resource which supports a mechanism for explicitly identifying a particular application (or other software process) as the current foreground application/process. An example of such a mechanism is the GetForegroundWindow function call, which is available in various Microsoft® Windows® operating systems.

Based on signal 122, monitor logic 130 generates one or more signals (such as the illustrative signal 132 shown) which indicate a particular task for which a prioritization is to be determined (e.g., created, deleted or updated). Signal 132 is communicated based on monitor logic 130 detecting, for example, that user 105 has initiated, terminated, or paused the execution of some software process (or other task on behalf of said software process). Additionally or alternatively, signal 132 is communicated in response to monitor logic 130 detecting a change of interest by user 105 in one currently executing software process over one or more other currently executing software processes.

In an illustrative scenario according to one embodiment, signal 132 communicates to prioritization logic 140 of computer device 110 that task T1 is currently a foreground task, and that task T2 is a background task. Such communication with signal 132 is, for example, based on execution environment 120 and/or the one or more human interface devices 170 detecting, according to some predefined criteria, a level of interest in GUI window 172 by user 105 is greater than that for GUI window 173.

Prioritization logic 140 comprises hardware and/or executing software which detects, based on signal 132, that a relative prioritization of tasks (and of respective data flows corresponding to said tasks) is to be generated, updated or otherwise determined. Some embodiments provide and/or operate based on a configuration state of prioritization logic 140 (e.g., the providing with a lookup table, linked list, or state machine other suitable mechanism) which specifies or otherwise indicates the relative prioritization of tasks.

For example, prioritization logic 140 includes or otherwise has access to reference information such as the illustrative table 142 shown. Table 142 comprises entries which each correspond to a different respective pending task. In response to signal 132, prioritization logic 140 creates, updates or otherwise accesses one or more such entries of table 142 to define or otherwise indicate a correspondence of different tasks each with a respective level of priority.

In the illustrative embodiment shown, prioritization logic 140 accesses table 142 to store, retrieve or otherwise identify a correspondence of tasks T1, T2 to priority levels PI, P2, respectively (e.g., wherein level P1 indicates a higher priority than level P2). Prioritization logic 140 is also operable to access table 142 to instead correspond tasks T2, T1 to priority levels PI, P2 (respectively) when, at a different time, the one or more human interface devices 170 detect that, as compared to task T1, task T2 is of greater interest to user 105.

As shown in table 142, each of tasks T1, T2 is represented (for example) by a respective unique task identifier and/or by information which identifies a corresponding data packet type. By way of illustration and not limitation, network communication with task T1 includes a first flow of data packets that are of a first packet type - e.g., wherein another network communication with task T2 includes a second flow of data packets that are of a second packet type. Task prioritization according to one such embodiment includes table 142 corresponding priority level P1 with flow information F1 which describes the first packet type, and further corresponding priority level P2 with flow information F2 which describes the second packet type. For example, flow information F1 (or flow information F2) includes one or more values of a TCP tuple, in some embodiments.

Based on a task prioritization which is indicated by table 142 at a given time, some embodiments variously determine whether and/or how one or more network interface resources are to be allocated for communication of a particular data flow. For example, respective data flows on behalf of concurrently pending tasks (e.g., including tasks T1, T2) include or are otherwise based on signals 124 that are communicated between execution environment 120 and a packet processor 150 of computer device 110. Signals 124 include information which is to be (or has been) communicated as various data packets 156 between network interface 160 of computer device 110 and a network 180. By way of illustration and not limitation, data packets 156 comprises first data packets that facilitate communication with task T1, where said first data packets are of a first packet type that (for example) includes or is otherwise indicated by flow information F1. In one such embodiment, data packets 156 further include second data packets that facilitate communication with task T2 - e.g., where said second data packets are of a second packet type that includes or is otherwise indicated by flow information F2.

Prioritization logic 140 communicates to packet processor 150 one or more signals (e.g., including the illustrative signal 144 shown) which specifies or otherwise communicates a relative task prioritization that is indicated at table 142. Signal 144 identifies to packet processor 150 a packet type of a task which is currently classified as being of a foreground task type - e.g., wherein signal 144 specifies or otherwise indicates that flow information F1 (which describes the first packet type) currently corresponds to the priority level P1. In some embodiments, signal 144 identifies task T1 as currently being a foreground task, where packet processor 150 determines (based on additional communications with execution environment 120, for example) that flow information F1 describes the corresponding first packet type.

In an embodiment, evaluation logic 152 of packet processor 150 comprises hardware and/or executing software which is configured to evaluate signals 124, where such evaluation is to identify data as corresponding to a particular one of a foreground task type or a background task type. For example, evaluation logic 152 identifies flow information based on signal 144, and monitors for communications which include or are otherwise associated with said flow information. In an illustrative scenario according to embodiment, evaluation logic 152 makes a determination based on signal 144 that a first packet type, which includes or is otherwise described by flow information F1, is currently assigned the priority level P1. Similarly, evaluation logic 152 determines based on signal 144 that a second packet type, which includes or is otherwise described by flow information F2, is currently assigned the priority level P2. Based on such determination, evaluation logic 152 identifies first data which has been (or which is to be) communicated in data packets of the first packet type, and/or identifies second data which has been (or which is to be) communicated in other data packets of the second packet type.

In some embodiments, evaluation logic 152 is coupled to allocation logic 154 of packet processor 150, wherein allocation logic 154 - responsive to evaluation logic 152 - comprises hardware and/or executing software which is configured to selectively allocate a network communication resource (or prevent such allocation) for a given data flow.

In one such embodiment, allocation logic 154 creates, modifies or otherwise determines information which is to be communicated in a data packet, where such information specifies or otherwise indicates how said data packet is to be communicated or otherwise processed. Additionally or alternatively, allocation logic 154 comprises or otherwise has access to one or more switches, multiplexers, demultiplexers and/or other such circuitry (responsive to evaluation logic 152) to selectively configure a path - e.g., one of multiple possible paths - for communicating a given data packet

In the example scenario shown, allocation logic 154 modifies first packets of the first packet type (the modifying responsive to evaluation logic 152) to indicate the priority level P1 that is currently associated with task T1. Furthermore, allocation logic 154 modifies second packets of the second packet type to indicate the priority level P2 that is currently associated with task T2.

Based on such modification of data packets, a resource (of packet processor 150 or network interface 160, for example) is used for communication and/or other processing of the first packets - e.g., where processing of the second packets omits any such use of said resource. Additionally or alternatively, a quality of service (QoS) is supported for the processing of the first packets - e.g., where a different QoS (or no QoS) is supported for the processing of the second packets. By way of illustration and not limitation, allocation logic 154 provides the first packets to a first one or more queues (not shown) of network interface 160, and further provides the second packets to a second one or more queues (not shown), the dequeueing of which is given relatively low priority, as compared to dequeueing from the first one or more queues. In another embodiment, the first packets and the second packets are communicated according to different respective minimum threshold rates.

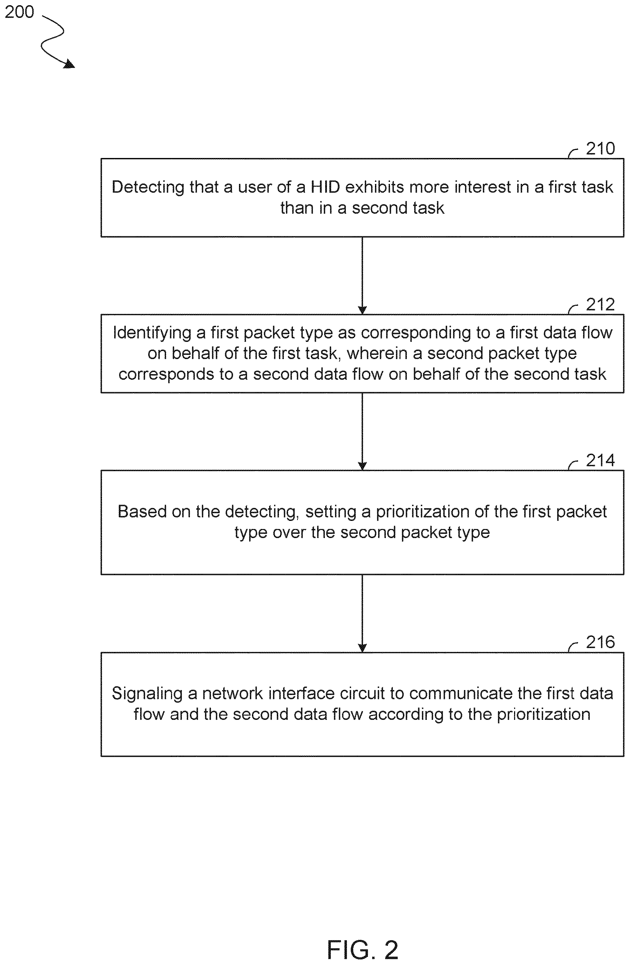

FIG. 2 shows features of a method 200 to prioritize network communications according to an embodiment. Method 200 is one example of an embodiment wherein, with respect to an accessibility of one or more network communication resources, a first task is prioritized over a second task. Such prioritization is based on the first task being a foreground task and/or otherwise identified as a task which (as compared to the second task) is of greater interest to a user. In various embodiments, method 200 is performed with hardware and/or executing software of system 100 (for example).

As shown in FIG. 2, method 200 includes (at 210) detecting that a user of a human interface device exhibits more interest in a first task than in a second task. The first task and the second task and copending with each other, and are executed each with a host OS of a device such as one having features of computer device 110. The detecting at 210 is performed, for example, with prioritization logic 140 based on signal 132 and, in some embodiments, with monitor logic 130 based on signal 122. In various embodiments, the detecting at 210 comprises determining that the first task is currently classified as being of a foreground task type - e.g., wherein such classification is determined based on a function call which requests an identifier of a foreground task. Alternatively or in addition, the detecting at 210 is based on another indication of user interest in the first task - e.g., where the detecting includes or is otherwise based on operations to track eye movement by the user.

Method 200 further comprises (at 212) identifying a first packet type as corresponding to a first data flow on behalf of the first task, wherein a second packet type other than the first packet type corresponds to a second data flow on behalf of the second task. For example, the identifying at 212 includes determining a TCP tuple or other flow information which is characteristic of the first packet type. In one illustrative embodiment, the identifying at 212 comprises or is otherwise based on prioritization logic 140 receiving flow information F1 and/or flow information F2 - e.g., the receiving via signal 132 or other such communications from one of monitor logic 130, execution environment 120, or packet processor 150.

The detecting at 210 and/or the identifying at 212 comprises or is otherwise based on or more operating system function calls that return one or more identifiers each of a respective executing application or associated processes. For example, in some embodiments that execute on a computer with the Microsoft® Windows® operating system, such an operating system function call includes one of GetForegroundWindow, GetWindowThreadProcessID, CreatToolhelp32Snapshot, Thread32First, Thread32Next, Process32First, and Process32Next. In some embodiments, the Windows function GetExtendedTcpTable is used, for example, to retrieve a table comprising information about available TCP endpoints. Alternatively or in addition, the Windows function GetPerTcpConnectionEStats (for example) is used to retrieve statistics for a TCP connection - e.g., wherein the enumeration value TcpConnectionEstatsBandwidth is used to identify a bandwidth delay product for a TCP connection. Any of various other OS-supported functions are additionally or alternatively used to identify network connection information, in different embodiments.

In one such embodiment, a foreground window is identified using a GetForegroundWindow operating system call. A response to such a GetForegroundWindow call is then used, for example, as an argument to make a GetWindowThreadProcessID call which returns identifiers of processes and threads associated with the foreground window. Other embodiments include using another of operating system calls listed above and/or other calls as will be apparent to one of skill in the art to identify system processes and/or flow information as described herein.

Based on the detecting at 210, method 200 (at 214) sets a prioritization of the first packet type over the second packet type. For example, setting the prioritization at 214 comprises creating, modifying and/or deleting reference information - such as that illustrated with table 142 - to provide a configuration state which specifies or otherwise indicates a correspondence of different pending tasks (and/or of their corresponding data flows) each with a respective one of two or more possible priority levels. In an embodiment, the setting at 214 comprises setting the prioritization based on the first task being a foreground task for at least a threshold minimum period of time (e.g., 0.5 second, 1.0 second, or the like).

Method 200 further comprises (at 216) signaling a network interface circuit to communicate the first data flow and the second data flow, each with a network, according to the prioritization. For example, based on the prioritization set at 214, some embodiments selectively allocate a network interface resource (or prevent such allocation) for use in the communication of data packets of a particular packet type. In some embodiments, the network interface circuit (including some or all of network interface 160, for example) comprises a first queue and a second queue, wherein the network interface circuit prioritizes dequeues from the first queue over dequeues from the second queue. Based on the signaling at 216, a first packet of the first packet type is provided to the first queue, and a second packet of the second packet type is provided to the second queue.

In one such embodiment, the network interface circuit further comprises a third queue, wherein the network interface circuit prioritizes dequeues from the second queue over dequeues from the third queue. While the prioritization set at 214 indicates a relatively high priority of the first packet type, packets of the second packet type are selectively enqueued each to a respective one of the second queue or the third queue. Such selective enqueueing is, in various embodiments, based at least in part on a determination as to whether a higher priority data flow - in this example, the first data flow - is experiencing network (or other) congestion. For example, based on both the signaling at 216 and a congestion state of the first data flow, a third packet of the second packet type is enqueued to the third queue - e.g., wherein (at a different time) the second packet is enqueued to the second queue further based on a failure to detect such a congestion state of the first data flow.

In some embodiments, the signaling at 216 comprises providing, in a field of a given packet, information which specifies or otherwise indicates a priority of a packet - e.g., wherein a format of the packet is adapted from an Internet Protocol (IP) packet format, a Transmission Control Protocol (TCP) packet format, an Ethernet frame format, or any of various other suitable standard packet formats. In one such embodiment, the network interface circuit (and/or other logic in communication with the network interface circuit) recognizes information in such a packet field as indicating a type of processing to be provided with the network interface circuit.

By way of illustration and not limitation, the signaling at 216 comprises indicating a priority of a packet with a Differentiated Services (DS) field thereof - e.g., with a differentiated services code point (DSCP) portion of said DS field - such as that set forth in the Request for Comments (RFC) 2474, published December 1998 by the Internet Engineering Task Force (IETF). Alternatively, a priority of a packet is indicated with a class of service (TID) field such as that set forth in the 802.11e-2005 specification, published November 2005 by the Institute of Electrical and Electronics Engineers (IEEE). Any of various types of service (TOS) fields, class of service (TOS) fields or other such standard packet fields are adapted to communicate packet priority, in other embodiments.

Some embodiments repeatedly and variously perform a sequence of operations such as those shown in FIG. 2 - e.g., wherein, at a different time, a task other than the first task is detected as a task which (as compared to one or more other copending tasks) is of more interest to the user. In response to such detecting, some other packet type - e.g., the second packet type - is prioritized over one or more other packet types which each correspond to a different respective data flow. The network interface circuit subsequently communicates data flows with the network based on this different prioritization of tasks relative to each other.

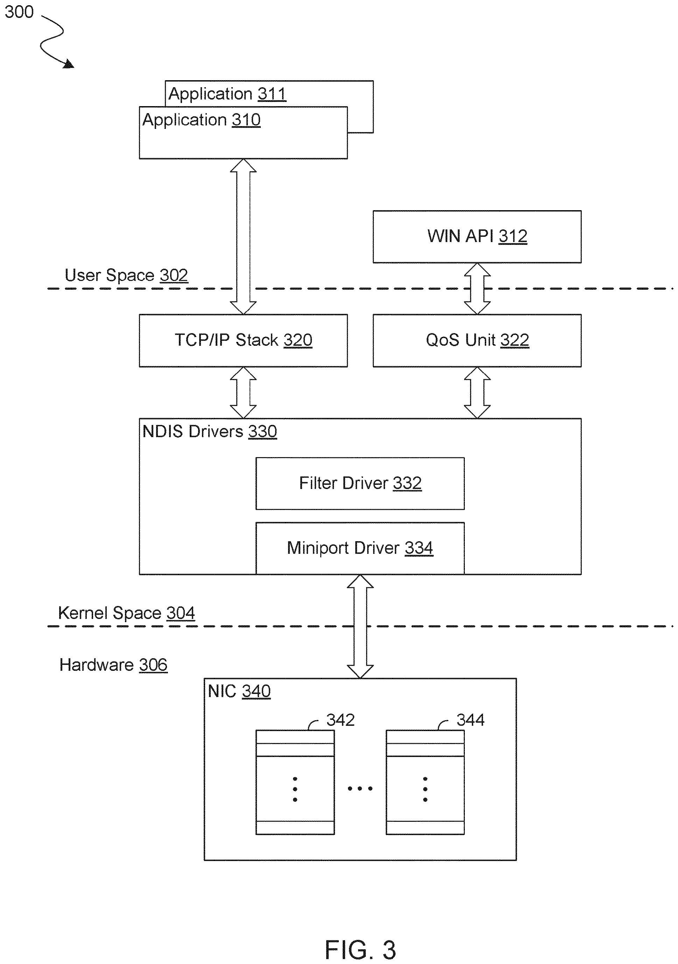

FIG. 3 shows features of a device 300 to provide a prioritized communication of data packets according to an embodiment. Device 300 is one example of an embodiment wherein software executes to provide at least some functionality to prioritize a task (and a corresponding data flow on behalf of said task) based on user interest in the task. In various embodiments, device 300 includes features of system 100 - e.g., where functionality of device 300 is provided according to method 200.

As shown in FIG. 3, executing software of device 300 provides a user space 302 and a kernel space 304 that operate together with certain hardware 306. In some embodiments, the user space 302 (provided, for example, with execution environment 120) supports the execution of multiple software processes such as the illustrative applications 310, 311 shown. During operation of device 300, applications 310, 311 are copending, and variously participate each in a different respective data flow which communicates information between a network (not shown) which is coupled to device 300, and a network interface controller (NIC) 340 of hardware 306. By way of illustration and not limitation, data flows - each on behalf of a corresponding one of applications 310, 311 - variously communicate respective data via a protocol stack such as the illustrative TCP/IP stack 320 shown. In another embodiment, different tasks of the same software process (e.g., tasks of the host operating system or tasks of a single application which is executed with the operating system) each participate in a different respective data flow.

In the example embodiment shown, kernel space 304 comprises or otherwise supports one or more drivers which facilitate communication of data packets to and/or from TCP/IP stack 320. By way of illustration and not limitation, kernel space 304 comprises Network Driver Interface Specification (NDIS) drivers 330 - coupled between TCP/IP stack 320 and NIC 340 - which are compatible with any of various NDIS specifications developed by Microsoft Corporation and 3Com Corporation. In one such embodiment, NDIS drivers 330 includes a miniport driver 334 that is provided (for example) as a component of a Microsoft® Windows® operating system model (WDM).

At a given time during operation of device 300, one or more signals are communicated to indicate a current level of interest, by a user of device 300, in a particular one of applications 310, 311. For example, the one or more signals are generated with one or more HIDs (not shown) which are included in, or coupled to, device 300. User interest is indicated, for example, by the user selecting or otherwise interacting with a GUI feature which is presented in a display (not shown), where the GUI feature corresponds a particular one and only one of applications 310, 311. However, any of various other techniques (e.g., including voice recognition, eye tracking or the like) are to provide an additional or alternative basis for detecting user interest, in other embodiments.

Some embodiments variously provide a quality of service (QoS) functionality - e.g., an inspection process illustrated in FIG. 3 by QoS unit 322 - that performs regular monitoring as to which task (e.g., an application or other process), executed in user space 302, is currently a foreground task. For example, user space 302 includes an application programming interface (API) - such as the illustrative Windows® API (WINAPI) 312 shown - which supports a function call to get from a host OS an identifier or other indication of a foreground task. QoS unit 322 issues such a function call to WINAPI 312 - e.g., where the function call is a GetForegroundWindow request supported by Microsoft® Windows® operating systems.

In various embodiment, NDIS drivers 330 further comprises a filter driver 332 which modifies data packets and/or otherwise generates information that is to prioritize a processing by NIC 340 of one packet type over a processing of one or more other packet types. By way of illustration and not limitation, NIC 340 comprises multiple queues (such as the illustrative queues 342,..., 344 shown) that include one or more transmit queues and/or one or more receive queues. For a given one of queues 342,..., 344, the queue is configured each to enqueue packets from a respective one of NDIS drivers 330 or a network which is in communication with device 300 via NIC 340 - e.g., where the queue is to dequeue packets said to the other one of NDIS drivers 330 or the network..

In one such embodiment, NIC 340 is configured to prioritize one queue over another queue - e.g., wherein the dequeueing of packets from queue 342 is to be given higher priority over the dequeueing of packets from queue 344. NIC 340 operates to variously allocate different ones of queues 342,..., 344 each to a different respective one or more types of packets - e.g., to enable one packet type (and a corresponding type of data flow) to be communicated relatively more quickly than another packet type. In one example embodiment, functionality of monitor logic 130 is provided with QoS unit 322 (and, in some embodiments, with WIN API 312) - e.g., where functionality of evaluation logic 152 and allocation logic 154 is provided with filter driver 332, and where functionality of network interface 160 is provided with NIC 340.

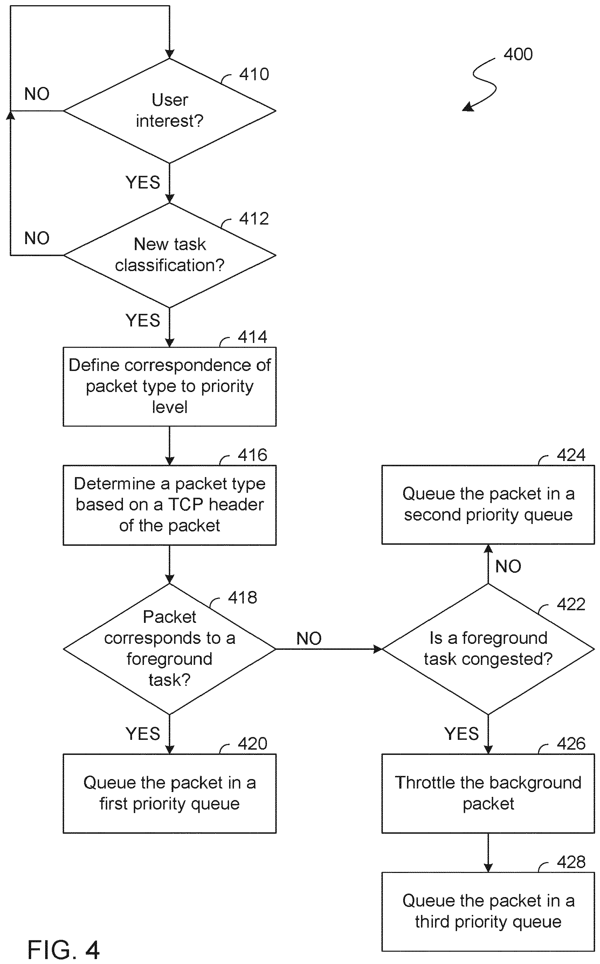

FIG. 4 shows features of a method 400 to prioritize network communications according to an embodiment. Method 400 is one example of an embodiment wherein a network interface resource is allocated for processing of a data packet, where such allocation is based on a relative prioritization of tasks (where the prioritization is based on user interest in a task), and further based on whether, according to some predefined criteria, a particular data flow is currently experiencing network (or other) congestion. In various embodiments, method 400 is performed with computer device 110 or device 300 - e.g., where method 400 includes some or all of method 200.

Method 400 facilitates the enqueueing of a given packet to any of multiple queues of network interface circuitry such as that of NIC 340. The multiple queues comprise a first priority queue, a second priority queue, and a third priority queue which correspond (respectively) to a highest priority dequeueing, a middle priority dequeueing, and lowest priority dequeueing. Some embodiments are not limited to a particular number of queues (or to a particular size of any one particular queue) that is/are provided for a given priority level.

In one example embodiment, a software process is assigned a relatively high priority queue based on a determination that user interaction with the software process is (according to some predefined criteria) sufficiently recent and/or continuous. In one such embodiment, a software process is instead assigned a medium priority queue based on a determination that user interaction with the software process are insufficiently recent and/or continuous, but wherein UI output of the software process (e.g., including audio, video, haptic and/or other output) takes precedence over some UI I/O functionality of some other software process. By contrast, a software process is instead assigned a relatively low priority queue where UI I/O functionality, if any, of the software process (e.g., an anti-virus application) is disabled in favor of UI I/O functionality of another software process.

As shown in FIG. 4, method 400 includes determining (at 410) whether an indicia of user interest has been provided. For example, such indicia includes or is otherwise based on an output of one or more HIDs - e.g., where the indicia communicates whether a user has interacted with a GUI feature, directed a gaze to a region of a display, spoken a voice command to a virtual assistant, or the like.

Where the determining at 410 fails to detect an indicia of user interest, method 400 loops back to repeat the determining at 410 until such indicia is detected. However, where it is instead determined at 410 that an indicia of user interest has been received, method 400 determines (at 412) whether a new classification of a task is to be configured. For example, a new classification of a task as the current foreground task is indicated where the task in question has been started, or selected over one or more other copending tasks. Similarly, a new classification of a task as a current background task is indicated where said task has been paused, terminated, or deselected (e.g., by virtue of a selection of another copending task).

Where the determining at 412 fails to detect that a new task classification is to be provided, method 400 loops back to repeat the determining at 410. However, where it is instead determined at 412 that a new task classification is to be provided, method 400 defines a correspondence (at 414) of one or more packet types each to a respective priority level. In one such embodiment, the defining at 414 includes or is otherwise based on an identification of one or more tasks each with a respective packet type (e.g., including a respective TCP tuple). For example, a first packet type is identified as corresponding to a current foreground task which is to be corresponded to a highest priority level of two or more possible priority levels. By way of illustration and not limitation, the defining at 414 comprises accessing table 142 (or other such reference information) to specify a correspondence of TCP tuples each with a respective priority level. Method 400 further comprises (at 416) determining a packet type of a given packet that is to be communicated with network interface 160, NIC 340 or other such network interface circuitry. In the example embodiment shown, the determining at 416 is based on a TCP header of said packet.

Method 400 further comprises (at 418) determining, based on the packet type which is determined at 416, whether. Where it is determined at 418 that the given packet corresponds to the current foreground task, method 400 enqueues the packet (at 420) in the first priority queue. However, where it is instead determined at 418 that the given packet does not correspond to the current foreground task, method 400 determines (at 422) whether congestion is being experienced by network traffic for another task which is currently classified as the foreground task. By way of illustration and not limitation, a TCP connection's round trip time, bandwidth delay product (BDP), and/or congestion window size indicate whether a data flow on behalf of a corresponding task (e.g., a foreground task) is experiencing congestion.

Where it is determined at 422 that that no such congestion indicated, method 400 (at 424) enqueues the packet in question to the second priority queue. However, where it is instead determined at 422 that the current foreground task is experiencing congestion, method 400 (at 426) throttles the communication of data packets for some or all of the current background tasks, and (at 428) queue the packet in question to the third priority queue. In one such embodiment, the throttling at 426 is stopped or otherwise mitigated at a later time (not shown) when it is determined that network congestion has reduced.

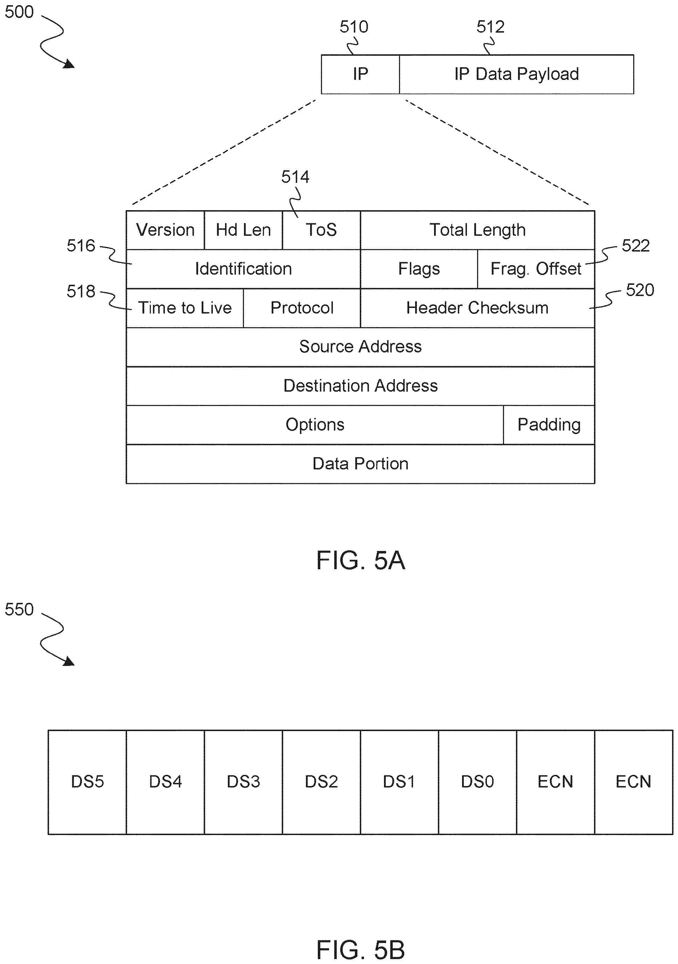

FIG. 5A shows a format of an Internet Protocol (IP) packet 500 that is to be communicated based on a prioritization of a packet type according to an embodiment. A prioritization of the packet type, and of a task which corresponds to the packet type, is provided based on an indication of a user's relative interest in the task. In some embodiments, an indication of packet/task priority is communicated in IP packet 500 itself - e.g., where the communication is performed with packet processor 150 or NDIS drivers 330 according to one of methods 200, 400.

As shown in FIG. 5A, format 500 IP packet 500 includes an IP packet header 510 or header portion, and an IP data payload 512 or data portion. Although some embodiments are not limited in this regard, a format of IP packet 500 is compatible in one or more respects with a format of an IP protocol, version 4 (IPv4), a format of an IP protocol, version 6 (IPv6), or the like. By way of illustration and not limitation, IP packet header 510 comprises an identification field 516 to provide a packet sequence number (for example), a time to live (TTL) field 518 to indicate an expiration (if any) of information communicated with IP packet 500, a fragment offset field 522 indicating an offset of fragmented data, and a header checksum field 520 to indicate possible errors in IP packet header 510.

In some embodiments, an indicator of a priority of IP packet 500 (and, correspondingly, of a task which communicates via IP packet 500) is provided in a type of service (ToS) field 514 of the IP header 510, or in a differentiated services (DS) field. For example, FIG. 5B illustrates a format of a DSCP field 550 such as one that is included, in various embodiments, as a portion of the ToS field 514 of IP packet header 510. DSCP field 550 enables the selection of any of various service parameters when IP packet 500 is communicating to a network interface from a network or, alternatively, from other hardware and/or software of a computer device which includes the network interface.

In FIG. 5B the first six bits (DS5-DS0) correspond to the DSCP and the final two bits (ECN) correspond to the Explicit Congestion Notification bits. A standardized DiffServ field of a packet can, for example, be adapted to provide a value so that the packet receives a particular queueing treatment, forwarding treatment or other resource access at network interface circuitry such as that of network interface 160 or NIC 340. In some embodiments, a default DSCP value is 000000.

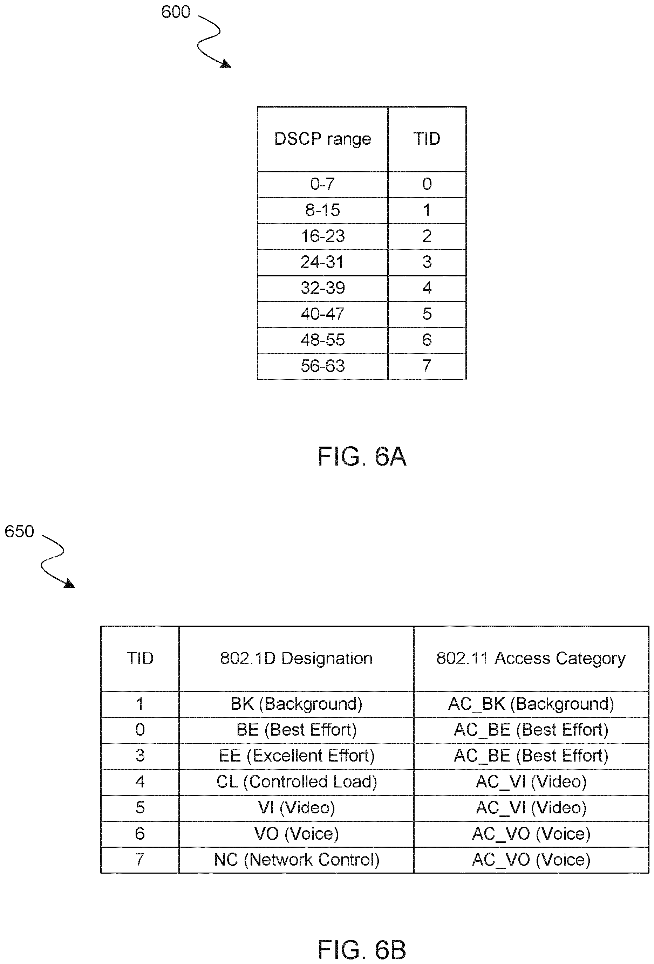

Referring now to FIG. 6A, table 600 illustrates an example mapping, according to some embodiments, of various ranges of possible DSCP values each to a respective traffic identifier (TID) value. Similarly, the table 650 in FIG. 6B illustrates a mapping of said TID values each to a respective designation according to an IEEE 802.1D specification, and each to a respective access category according to an IEEE 802.11 specification. A given DSCP value, in one of the ranges represented in table 600, is communicated with bits DS5-DS0 of DSCP field 550, for example. A given one of the TID values variously represented in tables 600, 650 is communicated, for example, in a TID field of a packet in a wireless LAN communication such as one which is compatible with an IEEE 802.11e standard.

The mapping shown by tables 600, 650 illustrate how, in some embodiments, a particular processing is invoked for a given packet by a DSCP value in said packet, wherein network interface circuitry recognizes the DSCP value as indicating an allocation of a corresponding type of queue and/or other network communication resource - e.g., the allocation corresponding to a respective IEEE 802.D designation or a respective 802.11 access category. In the example embodiment shown, a TID value of 1 is used to indicate "background" traffic such as bulk data transfers and backups, and a TID value of 0 is used to indicate traffic which merits "best-effort" for prompt delivery. Furthermore, a TID value of 3 is used to indicate traffic which merits "excellent effort" for prompt delivery, wherein a TID value of 4 is used to indicate "controlled-load" traffic for mission-critical applications (including some video use cases, for example). Further still, a TID value of 5 is used to indicate video traffic, wherein a TID value of 6 is used to indicate voice traffic, and wherein a TID value of 7 is used to indicate traffic for network management/control. It is noted that the TID value of 2 is reserved for future use in the relevant IEEE 802.1 and 802.11 standards.

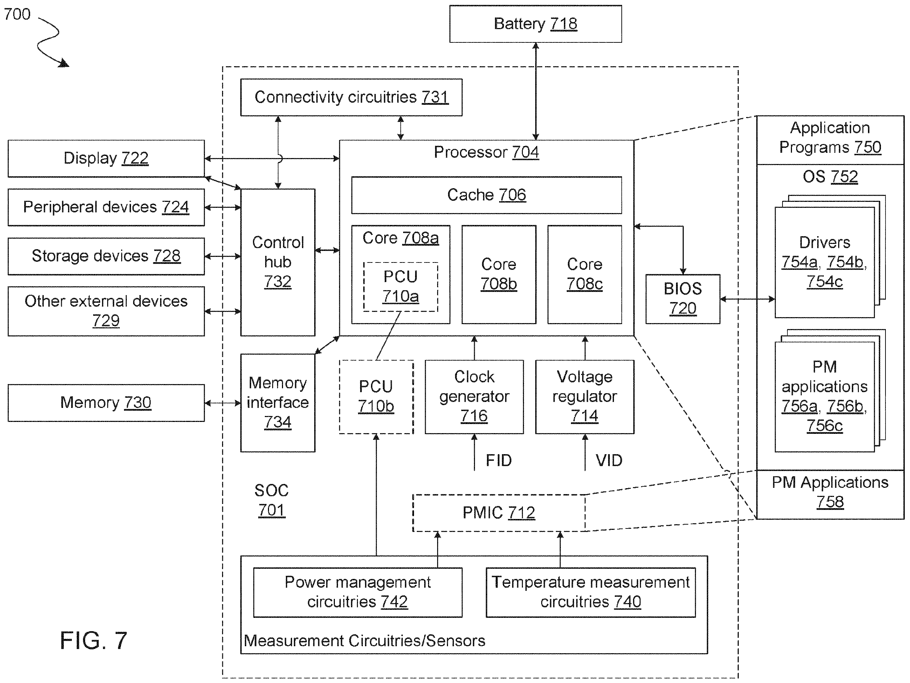

FIG. 7 illustrates a computer system or computing device 700 (also referred to as device 700), where a priority of network communications is determined, in accordance with some embodiments, based on an indication of user interest in a task. It is pointed out that those elements of FIG. 7 having the same reference numbers (or names) as the elements of any other figure can operate or function in any manner similar to that described, but are not limited to such.

In some embodiments, device 700 represents an appropriate computing device, such as a computing tablet, a mobile phone or smart-phone, a laptop, a desktop, an Internet-of-Things (IOT) device, a server, a wearable device, a set-top box, a wireless-enabled e-reader, or the like. It will be understood that certain components are shown generally, and not all components of such a device are shown in device 700.

In an example, the device 700 comprises a SoC (System-on-Chip) 701. An example boundary of the SOC 701 is illustrated using dotted lines in FIG. 7, with some example components being illustrated to be included within SOC 701 - however, SOC 701 may include any appropriate components of device 700.

In some embodiments, device 700 includes processor 704. Processor 2110 can include one or more physical devices, such as microprocessors, application processors, microcontrollers, programmable logic devices, processing cores, or other processing means. The processing operations performed by processor 704 include the execution of an operating platform or operating system on which applications and/or device functions are executed. The processing operations include operations related to I/O (input/output) with a human user or with other devices, operations related to power management, operations related to connecting computing device 700 to another device, and/or the like. The processing operations may also include operations related to audio I/O and/or display I/O.

In some embodiments, processor 704 includes multiple processing cores (also referred to as cores) 708a, 708b, 708c. Although merely three cores 708a, 708b, 708c are illustrated in FIG. 7, the processor 704 may include any other appropriate number of processing cores, e.g., tens, or even hundreds of processing cores. Processor cores 708a, 708b, 708c may be implemented on a single integrated circuit (IC) chip. Moreover, the chip may include one or more shared and/or private caches, buses or interconnections, graphics and/or memory controllers, or other components.

In some embodiments, processor 704 includes cache 706. In an example, sections of cache 706 may be dedicated to individual cores 708 (e.g., a first section of cache 706 dedicated to core 708a, a second section of cache 706 dedicated to core 708b, and so on). In an example, one or more sections of cache 706 may be shared among two or more of cores 708. Cache 706 may be split in different levels, e.g., level 1 (L1) cache, level 2 (L2) cache, level 3 (L3) cache, etc.

In some embodiments, processor core 704 may include a fetch unit to fetch instructions (including instructions with conditional branches) for execution by the core 704. The instructions may be fetched from any storage devices such as the memory 730. Processor core 704 may also include a decode unit to decode the fetched instruction. For example, the decode unit may decode the fetched instruction into a plurality of micro-operations. Processor core 704 may include a schedule unit to perform various operations associated with storing decoded instructions. For example, the schedule unit may hold data from the decode unit until the instructions are ready for dispatch, e.g., until all source values of a decoded instruction become available. In one embodiment, the schedule unit may schedule and/or issue (or dispatch) decoded instructions to an execution unit for execution.

The execution unit may execute the dispatched instructions after they are decoded (e.g., by the decode unit) and dispatched (e.g., by the schedule unit). In an embodiment, the execution unit may include more than one execution unit (such as an imaging computational unit, a graphics computational unit, a general-purpose computational unit, etc.). The execution unit may also perform various arithmetic operations such as addition, subtraction, multiplication, and/or division, and may include one or more an arithmetic logic units (ALUs). In an embodiment, a co-processor (not shown) may perform various arithmetic operations in conjunction with the execution unit.

Further, execution unit may execute instructions out-of-order. Hence, processor core 704 may be an out-of-order processor core in one embodiment. Processor core 704 may also include a retirement unit. The retirement unit may retire executed instructions after they are committed. In an embodiment, retirement of the executed instructions may result in processor state being committed from the execution of the instructions, physical registers used by the instructions being de-allocated, etc. The processor core 704 may also include a bus unit to enable communication between components of the processor core 704 and other components via one or more buses. Processor core 704 may also include one or more registers to store data accessed by various components of the core 704 (such as values related to assigned app priorities and/or sub-system states (modes) association.

In some embodiments, device 700 comprises connectivity circuitries 731. For example, connectivity circuitries 731 includes hardware devices (e.g., wireless and/or wired connectors and communication hardware) and/or software components (e.g., drivers, protocol stacks), e.g., to enable device 700 to communicate with external devices. Device 700 may be separate from the external devices, such as other computing devices, wireless access points or base stations, etc.

In an example, connectivity circuitries 731 may include multiple different types of connectivity. To generalize, the connectivity circuitries 731 may include cellular connectivity circuitries, wireless connectivity circuitries, etc. Cellular connectivity circuitries of connectivity circuitries 731 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, 3rd Generation Partnership Project (3GPP) Universal Mobile Telecommunications Systems (UMTS) system or variations or derivatives, 3GPP Long-Term Evolution (LTE) system or variations or derivatives, 3GPP LTE-Advanced (LTE-A) system or variations or derivatives, Fifth Generation (5G) wireless system or variations or derivatives, 5G mobile networks system or variations or derivatives, 5G New Radio (NR) system or variations or derivatives, or other cellular service standards. Wireless connectivity circuitries (or wireless interface) of the connectivity circuitries 731 refers to wireless connectivity that is not cellular, and can include personal area networks (such as Bluetooth, Near Field, etc.), local area networks (such as Wi-Fi), and/or wide area networks (such as WiMax), and/or other wireless communication. In an example, connectivity circuitries 731 may include a network interface, such as a wired or wireless interface, e.g., so that a system embodiment may be incorporated into a wireless device, for example, cell phone or personal digital assistant.

In some embodiments, device 700 comprises control hub 732, which represents hardware devices and/or software components related to interaction with one or more I/O devices. For example, processor 704 may communicate with one or more of display 722, one or more peripheral devices 724, storage devices 728, one or more other external devices 729, etc., via control hub 732. Control hub 732 may be a chipset, a Platform Control Hub (PCH), and/or the like.

For example, control hub 732 illustrates one or more connection points for additional devices that connect to device 700, e.g., through which a user might interact with the system. For example, devices (e.g., devices 729) that can be attached to device 700 include microphone devices, speaker or stereo systems, audio devices, video systems or other display devices, keyboard or keypad devices, or other I/O devices for use with specific applications such as card readers or other devices.

As mentioned above, control hub 732 can interact with audio devices, display 722, etc. For example, input through a microphone or other audio device can provide input or commands for one or more applications or functions of device 700. Additionally, audio output can be provided instead of, or in addition to display output. In another example, if display 722 includes a touch screen, display 722 also acts as an input device, which can be at least partially managed by control hub 732. There can also be additional buttons or switches on computing device 700 to provide I/O functions managed by control hub 732. In one embodiment, control hub 732 manages devices such as accelerometers, cameras, light sensors or other environmental sensors, or other hardware that can be included in device 700. The input can be part of direct user interaction, as well as providing environmental input to the system to influence its operations (such as filtering for noise, adjusting displays for brightness detection, applying a flash for a camera, or other features).

In some embodiments, control hub 732 may couple to various devices using any appropriate communication protocol, e.g., PCIe (Peripheral Component Interconnect Express), USB (Universal Serial Bus), Thunderbolt, High Definition Multimedia Interface (HDMI), Firewire, etc.

In some embodiments, display 722 represents hardware (e.g., display devices) and software (e.g., drivers) components that provide a visual and/or tactile display for a user to interact with device 700. Display 722 may include a display interface, a display screen, and/or hardware device used to provide a display to a user. In some embodiments, display 722 includes a touch screen (or touch pad) device that provides both output and input to a user. In an example, display 722 may communicate directly with the processor 704. Display 722 can be one or more of an internal display device, as in a mobile electronic device or a laptop device or an external display device attached via a display interface (e.g., DisplayPort, etc.). In one embodiment display 722 can be a head mounted display (HMD) such as a stereoscopic display device for use in virtual reality (VR) applications or augmented reality (AR) applications.

In some embodiments and although not illustrated in the figure, in addition to (or instead of) processor 704, device 700 may include Graphics Processing Unit (GPU) comprising one or more graphics processing cores, which may control one or more aspects of displaying contents on display 722.

Control hub 732 (or platform controller hub) may include hardware interfaces and connectors, as well as software components (e.g., drivers, protocol stacks) to make peripheral connections, e.g., to peripheral devices 724.

It will be understood that device 700 could both be a peripheral device to other computing devices, as well as have peripheral devices connected to it. Device 700 may have a "docking" connector to connect to other computing devices for purposes such as managing (e.g., downloading and/or uploading, changing, synchronizing) content on device 700. Additionally, a docking connector can allow device 700 to connect to certain peripherals that allow computing device 700 to control content output, for example, to audiovisual or other systems.

In addition to a proprietary docking connector or other proprietary connection hardware, device 700 can make peripheral connections via common or standards-based connectors. Common types can include a Universal Serial Bus (USB) connector (which can include any of a number of different hardware interfaces), DisplayPort including MiniDisplayPort (MDP), High Definition Multimedia Interface (HDMI), Firewire, or other types.

In some embodiments, connectivity circuitries 731 may be coupled to control hub 732, e.g., in addition to, or instead of, being coupled directly to the processor 704. In some embodiments, display 722 may be coupled to control hub 732, e.g., in addition to, or instead of, being coupled directly to processor 704.

In some embodiments, device 700 comprises memory 730 coupled to processor 704 via memory interface 734. Memory 730 includes memory devices for storing information in device 700. Memory can include nonvolatile (state does not change if power to the memory device is interrupted) and/or volatile (state is indeterminate if power to the memory device is interrupted) memory devices. Memory device 730 can be a dynamic random access memory (DRAM) device, a static random access memory (SRAM) device, flash memory device, phase-change memory device, or some other memory device having suitable performance to serve as process memory. In one embodiment, memory 730 can operate as system memory for device 700, to store data and instructions for use when the one or more processors 704 executes an application or process. Memory 730 can store application data, user data, music, photos, documents, or other data, as well as system data (whether long-term or temporary) related to the execution of the applications and functions of device 700.

Elements of various embodiments and examples are also provided as a machine-readable medium (e.g., memory 730) for storing the computer-executable instructions (e.g., instructions to implement any other processes discussed herein). The machine-readable medium (e.g., memory 730) may include, but is not limited to, flash memory, optical disks, CD-ROMs, DVD ROMs, RAMs, EPROMs, EEPROMs, magnetic or optical cards, phase change memory (PCM), or other types of machine-readable media suitable for storing electronic or computer-executable instructions. For example, embodiments of the disclosure may be downloaded as a computer program (e.g., BIOS) which may be transferred from a remote computer (e.g., a server) to a requesting computer (e.g., a client) by way of data signals via a communication link (e.g., a modem or network connection).

In some embodiments, device 700 comprises temperature measurement circuitries 740, e.g., for measuring temperature of various components of device 700. In an example, temperature measurement circuitries 740 may be embedded, or coupled or attached to various components, whose temperature are to be measured and monitored. For example, temperature measurement circuitries 740 may measure temperature of (or within) one or more of cores 708a, 708b, 708c, voltage regulator 714, memory 730, a mother-board of SOC 701, and/or any appropriate component of device 700.

In some embodiments, device 700 comprises power measurement circuitries 742, e.g., for measuring power consumed by one or more components of the device 700. In an example, in addition to, or instead of, measuring power, the power measurement circuitries 742 may measure voltage and/or current. In an example, the power measurement circuitries 742 may be embedded, or coupled or attached to various components, whose power, voltage, and/or current consumption are to be measured and monitored. For example, power measurement circuitries 742 may measure power, current and/or voltage supplied by one or more voltage regulators 714, power supplied to SOC 701, power supplied to device 700, power consumed by processor 704 (or any other component) of device 700, etc.

In some embodiments, device 700 comprises one or more voltage regulator circuitries, generally referred to as voltage regulator (VR) 714. VR 714 generates signals at appropriate voltage levels, which may be supplied to operate any appropriate components of the device 700. Merely as an example, VR 714 is illustrated to be supplying signals to processor 704 of device 700. In some embodiments, VR 714 receives one or more Voltage Identification (VID) signals, and generates the voltage signal at an appropriate level, based on the VID signals. Various type of VRs may be utilized for the VR 714. For example, VR 714 may include a "buck" VR, "boost" VR, a combination of buck and boost VRs, low dropout (LDO) regulators, switching DC-DC regulators, etc. Buck VR is generally used in power delivery applications in which an input voltage needs to be transformed to an output voltage in a ratio that is smaller than unity. Boost VR is generally used in power delivery applications in which an input voltage needs to be transformed to an output voltage in a ratio that is larger than unity. In some embodiments, each processor core has its own VR which is controlled by PCU 710a/b and/or PMIC 712. In some embodiments, each core has a network of distributed LDOs to provide efficient control for power management. The LDOs can be digital, analog, or a combination of digital or analog LDOs.

In some embodiments, device 700 comprises one or more clock generator circuitries, generally referred to as clock generator 716. Clock generator 716 generates clock signals at appropriate frequency levels, which may be supplied to any appropriate components of device 700. Merely as an example, clock generator 716 is illustrated to be supplying clock signals to processor 704 of device 700. In some embodiments, clock generator 716 receives one or more Frequency Identification (FID) signals, and generates the clock signals at an appropriate frequency, based on the FID signals.

In some embodiments, device 700 comprises battery 718 supplying power to various components of device 700. Merely as an example, battery 718 is illustrated to be supplying power to processor 704. Although not illustrated in the figures, device 700 may comprise a charging circuitry, e.g., to recharge the battery, based on Alternating Current (AC) power supply received from an AC adapter.

In some embodiments, device 700 comprises Power Control Unit (PCU) 710 (also referred to as Power Management Unit (PMU), Power Controller, etc.). In an example, some sections of PCU 710 may be implemented by one or more processing cores 708, and these sections of PCU 710 are symbolically illustrated using a dotted box and labelled PCU 710a. In an example, some other sections of PCU 710 may be implemented outside the processing cores 708, and these sections of PCU 710 are symbolically illustrated using a dotted box and labelled as PCU 710b. PCU 710 may implement various power management operations for device 700. PCU 710 may include hardware interfaces, hardware circuitries, connectors, registers, etc., as well as software components (e.g., drivers, protocol stacks), to implement various power management operations for device 700.

In some embodiments, device 700 comprises Power Management Integrated Circuit (PMIC) 712, e.g., to implement various power management operations for device 700. In some embodiments, PMIC 712 is a Reconfigurable Power Management ICs (RPMICs) and/or an IMVP (Intel® Mobile Voltage Positioning). In an example, the PMIC is within an IC chip separate from processor 704. The may implement various power management operations for device 700. PMIC 712 may include hardware interfaces, hardware circuitries, connectors, registers, etc., as well as software components (e.g., drivers, protocol stacks), to implement various power management operations for device 700.

In an example, device 700 comprises one or both PCU 710 or PMIC 712. In an example, any one of PCU 710 or PMIC 712 may be absent in device 700, and hence, these components are illustrated using dotted lines.

Various power management operations of device 700 may be performed by PCU 710, by PMIC 712, or by a combination of PCU 710 and PMIC 712. For example, PCU 710 and/or PMIC 712 may select a power state (e.g., P-state) for various components of device 700. For example, PCU 710 and/or PMIC 712 may select a power state (e.g., in accordance with the ACPI (Advanced Configuration and Power Interface) specification) for various components of device 700. Merely as an example, PCU 710 and/or PMIC 712 may cause various components of the device 700 to transition to a sleep state, to an active state, to an appropriate C state (e.g., C0 state, or another appropriate C state, in accordance with the ACPI specification), etc. In an example, PCU 710 and/or PMIC 712 may control a voltage output by VR 714 and/or a frequency of a clock signal output by the clock generator, e.g., by outputting the VID signal and/or the FID signal, respectively. In an example, PCU 710 and/or PMIC 712 may control battery power usage, charging of battery 718, and features related to power saving operation.

The clock generator 716 can comprise a phase locked loop (PLL), frequency locked loop (FLL), or any suitable clock source. In some embodiments, each core of processor 704 has its own clock source. As such, each core can operate at a frequency independent of the frequency of operation of the other core. In some embodiments, PCU 710 and/or PMIC 712 performs adaptive or dynamic frequency scaling or adjustment. For example, clock frequency of a processor core can be increased if the core is not operating at its maximum power consumption threshold or limit. In some embodiments, PCU 710 and/or PMIC 712 determines the operating condition of each core of a processor, and opportunistically adjusts frequency and/or power supply voltage of that core without the core clocking source (e.g., PLL of that core) losing lock when the PCU 710 and/or PMIC 712 determines that the core is operating below a target performance level. For example, if a core is drawing current from a power supply rail less than a total current allocated for that core or processor 704, then PCU 710 and/or PMIC 712 can temporality increase the power draw for that core or processor 704 (e.g., by increasing clock frequency and/or power supply voltage level) so that the core or processor 704 can perform at higher performance level. As such, voltage and/or frequency can be increased temporality for processor 704 without violating product reliability.

In an example, PCU 710 and/or PMIC 712 may perform power management operations, e.g., based at least in part on receiving measurements from power measurement circuitries 742, temperature measurement circuitries 740, charge level of battery 718, and/or any other appropriate information that may be used for power management. To that end, PMIC 712 is communicatively coupled to one or more sensors to sense/detect various values/variations in one or more factors having an effect on power/thermal behavior of the system/platform. Examples of the one or more factors include electrical current, voltage droop, temperature, operating frequency, operating voltage, power consumption, inter-core communication activity, etc. One or more of these sensors may be provided in physical proximity (and/or thermal contact/coupling) with one or more components or logic/IP blocks of a computing system. Additionally, sensor(s) may be directly coupled to PCU 710 and/or PMIC 712 in at least one embodiment to allow PCU 710 and/or PMIC 712 to manage processor core energy at least in part based on value(s) detected by one or more of the sensors.

Also illustrated is an example software stack of device 700 (although not all elements of the software stack are illustrated). Merely as an example, processors 704 may execute application programs 750, Operating System 752, one or more Power Management (PM) specific application programs (e.g., generically referred to as PM applications 758), and/or the like. PM applications 758 may also be executed by the PCU 710 and/or PMIC 712. OS 752 may also include one or more PM applications 756a, 756b, 756c. The OS 752 may also include various drivers 754a, 754b, 754c, etc., some of which may be specific for power management purposes. In some embodiments, device 700 may further comprise a Basic Input/Output System (BIOS) 720. BIOS 720 may communicate with OS 752 (e.g., via one or more drivers 754), communicate with processors 704, etc.

For example, one or more of PM applications 758, 756, drivers 754, BIOS 720, etc. may be used to implement power management specific tasks, e.g., to control voltage and/or frequency of various components of device 700, to control wake-up state, sleep state, and/or any other appropriate power state of various components of device 700, control battery power usage, charging of the battery 718, features related to power saving operation, etc.

In some embodiments, multiple tasks are variously performed each with a respective one of application programs 750 and/or OS 752. At a given time during operation of computing device 700, at least some of the tasks each result in, or otherwise correspond to, a respective input being received via one or more human interface devices (HIDs). Said tasks each further include or otherwise correspond to a different respective data flow by which computing device 700 communicates with one or more networks (e.g., via connectivity circuitries 731). User input and/or other characteristics of user behavior are detected with the one or more HIDs, and provide a basis for detecting a relative interest by the user in one task over one or more other copending tasks. By way of illustration and not limitation, OS 752 provides a kernel space in which QoS logic, a filter driver, and/or other suitable software logic executes to detect a task which is currently of relatively greater user interest, and to prioritize a data flow which corresponds to said task. An indication of the relative prioritization of tasks (e.g., and the relative prioritization of corresponding data flows) is communicated, for example, from processor 704 to connectivity circuitries 731. Based on such signaling, connectivity circuitries 731 variously processes data packets according to the prioritization of tasks relative to each other.

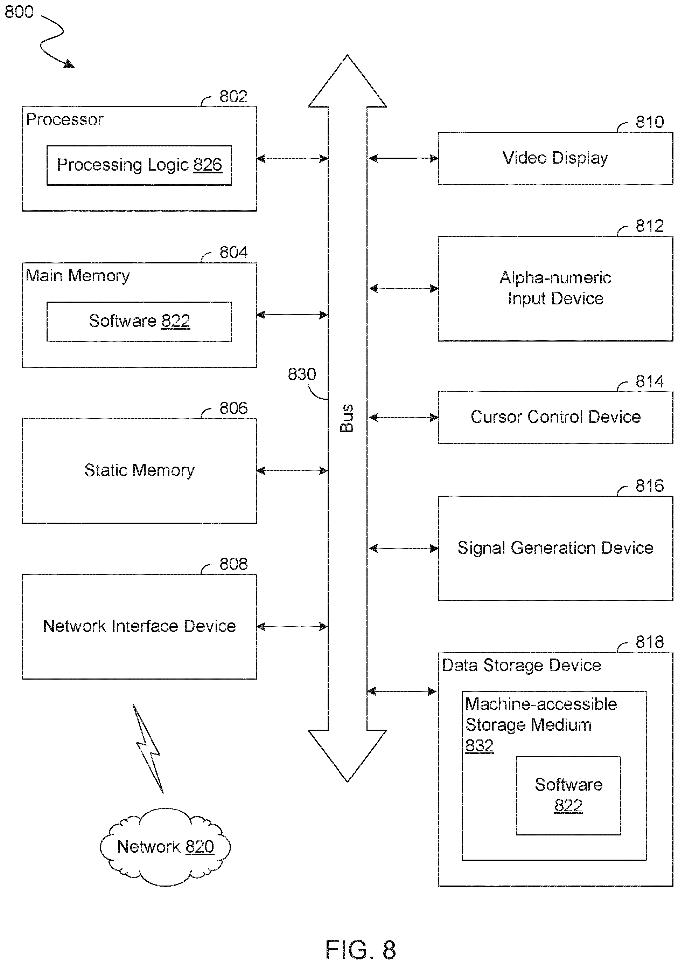

FIG. 8 illustrates a diagrammatic representation of a machine in the exemplary form of a computer system 800 within which a set of instructions, for causing the machine to perform any one or more of the methodologies described herein, may be executed. In alternative embodiments, the machine may be connected (e.g., networked) to other machines in a Local Area Network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines (e.g., computers) that individually or jointly execute a set (or multiple sets) of instructions to perform any one or more of the methodologies described herein.

The exemplary computer system 800 includes a processor 802, a main memory 804 (e.g., read-only memory (ROM), flash memory, dynamic random access memory (DRAM) such as synchronous DRAM (SDRAM) or Rambus DRAM (RDRAM), etc.), a static memory 806 (e.g., flash memory, static random access memory (SRAM), etc.), and a secondary memory 818 (e.g., a data storage device), which communicate with each other via a bus 830.

Processor 802 represents one or more general-purpose processing devices such as a microprocessor, central processing unit, or the like. More particularly, the processor 802 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 802 may also be one or more special-purpose processing devices such as an application specific integrated circuit (ASIC), a field programmable gate array (FPGA), a digital signal processor (DSP), network processor, or the like. Processor 802 is configured to execute the processing logic 826 for performing the operations described herein.

The computer system 800 may further include a network interface device 808. The computer system 800 also may include a video display unit 810 (e.g., a liquid crystal display (LCD), a light emitting diode display (LED), or a cathode ray tube (CRT)), an alphanumeric input device 812 (e.g., a keyboard), a cursor control device 814 (e.g., a mouse), and a signal generation device 816 (e.g., a speaker).

The secondary memory 818 may include a machine-accessible storage medium (or more specifically a computer-readable storage medium) 832 on which is stored one or more sets of instructions (e.g., software 822) embodying any one or more of the methodologies or functions described herein. The software 822 may also reside, completely or at least partially, within the main memory 804 and/or within the processor 802 during execution thereof by the computer system 800, the main memory 804 and the processor 802 also constituting machine-readable storage media. The software 822 may further be transmitted or received over a network 820 via the network interface device 808.

While the machine-accessible storage medium 832 is shown in an exemplary embodiment to be a single medium, the term "machine-readable storage medium" should be taken to include a single medium or multiple media (e.g., a centralized or distributed database, and/or associated caches and servers) that store the one or more sets of instructions. The term "machine-readable storage medium" shall also be taken to include any medium that is capable of storing or encoding a set of instructions for execution by the machine and that cause the machine to perform any of one or more embodiments. The term "machine-readable storage medium" shall accordingly be taken to include, but not be limited to, solid-state memories, and optical and magnetic media.

Techniques and architectures for determining a priority of a network communication are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. An apparatus comprising:
first circuitry to detect that a user of a human interface device exhibits more interest in a first task than in a second task, wherein the first task and the second task are each to be executed with a host operating system (OS);
second circuitry, responsive to the first circuitry, to:
identify a first packet type as corresponding to a first data flow on behalf of the first task, wherein a second packet type other than the first packet type corresponds to a second data flow on behalf of the second task; and
set a prioritization of the first packet type over the second packet type;
third circuitry, coupled the second circuitry, to signal a network interface circuit to communicate the first data flow and the second data flow, each with a network, according to the prioritization.

2. The apparatus of claim 1, wherein the network interface circuit comprises a first queue and a second queue;
wherein the network interface circuit is to prioritize a dequeue from the first queue over a dequeue from the second queue; and
wherein, responsive to the third circuitry, the network interface is to:
provide a first packet of the first packet type to the first queue; and
provide a second packet of the second packet type to the second queue.

3. The apparatus of claim 2, wherein the network interface circuit further comprises a third queue;
wherein the network interface circuit prioritizes a dequeue from the second queue over a dequeue from the third queue;
wherein, based on a congestion state of the first data flow, the network interface is to provide a third packet of the second packet type to the third queue; and
wherein the network interface is to provide the second packet to the second queue further based on a failure to detect the congestion state of the first data flow.

4. The apparatus of either of claim 1 or claim 2, wherein the third circuitry to signal the network interface circuit to communicate the first data flow and the second data flow comprises the third circuitry to indicate a priority of a packet with a differentiated services code point field of the packet.

5. The apparatus of either of claim 1 or claim 2, wherein the third circuitry to signal the network interface circuit to communicate the first data flow and the second data flow comprises the third circuitry to indicate a priority of a packet with a traffic identifier field of the packet.

6. The apparatus of claim 1, wherein the first circuitry to detect that the user exhibits more interest in the first task than in the second task comprises the first circuitry to determine that the first task is currently classified as being of a foreground task type.

7. The apparatus of claim 6, wherein the first circuitry is to determine that the first task is currently classified as being of the foreground task type based on a response by the host OS to a function call which requests an identifier of a foreground task.

8. The apparatus of claim 6, wherein the second circuity is to set the prioritization based on the first task being a foreground task for at least a threshold minimum period of time.

9. The apparatus of either of claim 1 or claim 2, wherein the first circuitry to detect that the user exhibits more interest in the first task than in the second task comprises first circuitry to evaluate an eye movement by the user.

10. A method comprising:
detecting that a user of a human interface device exhibits more interest in a first task than in a second task, wherein the first task and the second task are each executed with a host operating system (OS);
identifying a first packet type as corresponding to a first data flow on behalf of the first task, wherein a second packet type other than the first packet type corresponds to a second data flow on behalf of the second task;
based on the detecting, setting a prioritization of the first packet type over the second packet type;
signaling a network interface circuit to communicate the first data flow and the second data flow, each with a network, according to the prioritization.

11. The method of claim 10, wherein the network interface circuit comprises a first queue and a second queue;
wherein the network interface circuit prioritizes a dequeue from the first queue over a dequeue from the second queue; and
wherein, based on the signaling, a first packet of the first packet type is provided to the first queue, and a second packet of the second packet type is provided to the second queue.

12. The method of claim 11, wherein the network interface circuit further comprises a third queue;
wherein the network interface circuit prioritizes a dequeue from the second queue over a dequeue from the third queue;
wherein, based on both the signaling and a congestion state of the first data flow, a third packet of the second packet type is provided to the third queue; and
wherein the second packet is provided to the second queue further based on a failure to detect the congestion state of the first data flow.

13. The method of either of claim 10 or claim 11, wherein signaling the network interface circuit to communicate the first data flow and the second data flow comprises indicating a priority of a packet with a differentiated services code point field of the packet.

14. The method of either of claim 10 or claim 11, wherein signaling the network interface circuit to communicate the first data flow and the second data flow comprises indicating a priority of a packet with a traffic identifier field of the packet.

15. A computer program product having instructions stored thereon that when executed by a processor, carry out the method of any of claims 10 through 14.
